# EUROPÄISCHE PATENTSCHRIFT

(11) **EP 1 474 656 B1**
(45) Veröffentlichungstag und Bekanntmachung des Hinweises auf die Patenterteilung: **13.05.2009**
(21) Anmeldenummer: 02798261.0
(22) Anmeldetag: 06.12.2002
(51) Int. Cl.: G01C 21/36, G06F 3/033

(54) **EINGABEVERFAHREN ZUR EINGABE EINES NAMENS**
INPUT METHOD FOR ENTERING A NAME
PROCEDE DE SAISIE POUR ENTRER UN NOM

(30) Priorität: 07.02.2002 DE 10205017
(43) Veröffentlichungstag der Anmeldung: 10.11.2004
(73) Patentinhaber: ROBERT BOSCH GMBH, 70442 Stuttgart (DE)
(72) Erfinder: LUEER, Stefan, 31137 Hildesheim (DE)
(86) Internationale Anmeldenummer: PCT/DE2002/004470
(87) Internationale Veröffentlichungsnummer: WO 2003/067193

(56) Entgegenhaltungen:
- DE-A- 10 003 737
- DE-A- 10 012 441

## Beschreibung

### Stand der Technik

Die Erfindung geht aus von einem Eingabeverfahren nach der Gattung des unabhängigen Anspruchs. Es sind schon Eingabeverfahren bekannt, bei denen ein Benutzer aus einer Liste einen Namen auswählt, den er in ein elektrisches Gerät zur Weiterverarbeitung eingeben will. Die Eingabe kann durch Berühren eines berührungsempfindlichen Bildschirms oder durch Auswahl mit einer Anzeigemarke und einer anschließenden Bestätigung der Auswahl über eine Bestätigungstaste oder eine andere Bestätigungsfunktion erfolgen. Insbesondere bei der Auswahl von Ortsnamen tritt der Fall auf, dass z.B. die Eingabe einer Stadt keine ausreichende Genauigkeit für die Eingabe bietet, sondern dass auch ein Stadtteil eingegeben werden muss. Dies ist insbesondere bei größeren Städten erforderlich. Hierzu ist es bekannt, neben dem Hauptort auch jeweils einen Eintrag für die verschiedenen Stadtteile vorzusehen. Infolge dessen wird jedoch die Liste stark verlängert, so dass die Auswahl aus der Liste für den Benutzer erschwert ist. Zur Lösung dieses Problems ist es bekannt, für den Fall, dass einer Stadt zusätzlich mehrere Stadtteile zugeordnet sind, in einer ersten Auswahlliste nur den Hauptort anzuzeigen. Will ein Benutzer den Ortsnamen selber eingeben, muss er zuerst die Stadt auswählen, wonach eine weitere Liste in einer Anzeige dargestellt wird. Aus dieser Liste kann der Benutzer dann den Stadtteil auswählen. Dies ist insbesondere nachteilig bei kleineren Städten, die nur wenige Stadtteile aufweisen, da bei diesen für eine Auswahl aus wenigen Auswahlmöglichkeiten bereits ein zusätzliches Auswahlfeld dargestellt und eine zusätzliche Eingabe durchgeführt werden muss, wodurch der Bedienvorgang verlängert wird.

### Vorteile der Erfindung

Die erfindungsgemäße Eingabevorrichtung mit den Merkmalen des unabhängigen Anspruchs hat demgegenüber den Vorteil, dass bis zu einer vorgegebenen Anzahl von Einträgen mit einem gleichen Namensbestandteil die Einträge alle mit in die Liste aufgenommen werden, so dass eine direkte Eingabe möglich ist. Erst bei einer Überschreitung der vorgegebenen Anzahl wird dem Benutzer eine Auswahl aus einem zusätzlich anzuzeigenden Menü angeboten. Einerseits wird hierdurch die dem Benutzer zuerst angezeigte Auswahlliste nicht unnötig verlängert, andererseits hat er die Möglichkeit, bei einem Eintrag mit nur wenigen gleichen Namensbestandteilen, diese unmittelbar aus der Hauptliste auszuwählen, ohne sich hierzu ein neues, weiteres Auswahlmenü anzeigen lassen zu müssen. Hierdurch wird die Eingabe von Namen vereinfacht, so dass insgesamt die Bedienung des Geräts, in das der Name eingegeben werden soll, vereinfacht wird.

Durch die in den abhängigen Ansprüchen aufgeführten Maßnahmen sind vorteilhafte Weiterbildungen und Verbesserungen des im unabhängigen Anspruch angegebenen Eingabeverfahrens möglich. Besonders vorteilhaft ist, als übereinstimmende Namensbestandteile nur erste Namensbestandteile zu verwenden, da im Allgemeinen angezeigte Listen alphabetisch geordnet sind, so dass hierbei eng beieinander stehende Einträge in einer Liste gegebenenfalls in einem weiteren Menü zusammengefasst werden können.

Besonders vorteilhaft ist, Ortsnamen mit dem Eingabeverfahren einzugeben, da insbesondere für die Eingabe von Stadtteilen oftmals der erste Namensbestandteil, nämlich der Hauptort, übereinstimmt. Hierbei ist ferner vorteilhaft, die vorgegebene Anzahl in Abhängigkeit von der Größe eines Ortes zu wählen, so dass bei einer größeren Stadt gegebenenfalls mehrere Einträge in die Listendarstellung aufgenommen werden, da aufgrund der Größe der Stadt die Wahrscheinlichkeit für einen Aufruf größer ist. Die Größe einer Stadt ist hierbei insbesondere hinsichtlich der Einwohnerzahl der Stadt zu verstehen. Ferner kann auch die Verwaltungsmäßige Bedeutung der Stadt oder die geographische Ausdehnung der Stadt Bedeutung für die Darstellung in der Anzeige haben.

Ferner ist vorteilhaft, die vorgegebene Anzahl in Abhängigkeit von dem übereinstimmenden Namensbestandteil zu wählen. Hierbei ist es z.B. möglich, dass bei häufig eingegebenen Namen diese bevorzugt in die Liste aufgenommen werden, so dass der Benutzer bei diesem Namen nicht in ein weiteres Menü wechseln muss.

Ferner ist vorteilhaft, die vorgegebene Anzahl im Normalfall auf drei zu begrenzen, da die Anzeige von drei Auswahlmöglichkeiten auch z.B. bei in Fahrzeugen üblichen kleinen Bildschirmen noch möglich ist und somit ein Benutzer die kompletten Auswahlmöglichkeiten zu einem übereinstimmenden Namensbestandteil einfach überblicken kann.

Besonders vorteilhaft ist die Verwendung zur Eingabe von Namen in einem Kraftfahrzeug, da sich ein Fahrer hier in erster Linie auf den Straßenverkehr konzentrieren muss und somit ein einfaches Eingabeverfahren für ihn besonders nützlich ist.

### Zeichnung

Ausführungsbeispiele der Erfindung sind in der Zeichnung dargestellt und in der nachfolgenden Beschreibung näher erläutert. Es zeigen
Figur 1 eine Navigationsvorrichtung in einem Kraftfahrzeug zur Durchführung des erfindungsgemäßen Verfahrens,
Figur 2 ein Ausführungsbeispiel für einen Verfahrensablauf des erfindungsgemäßen Verfahrens.

### Beschreibung des Ausführungsbeispiels

Das erfindungsgemäße Eingabeverfahren kann für eine beliebige Eingabe von Namen verwendet werden. Insbesondere dient es zur Eingabe von Namen in Rechenvorrichtungen oder sonstigen elektrischen Geräte, die eingegebene Namen verarbeiten können. Dies können z.B. Namen von Computerprogrammen oder Namen sein, die einer Auswahl einer Telefonnummer dienen. Insbesondere ist das Eingabeverfahren vorteilhaft für die Eingabe von Ortsnamen bei denen, sofern ein Stadtteil angegeben ist, der Hauptort jeweils übereinstimmt. Im Folgenden ist das erfindungsgemäße Eingabeverfahren am Beispiel eines Eingabeverfahrens von Ortsnamen in eine Navigationsvorrichtung in einem Kraftfahrzeug erläutert.

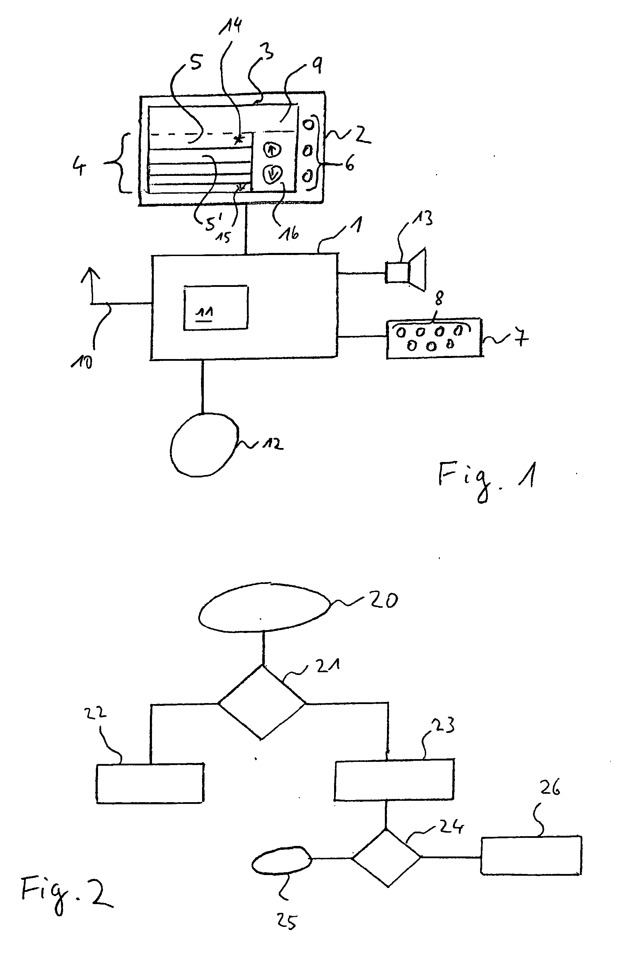

In der Figur 1 ist eine Navigationsvorrichtung 1 in einem Kraftfahrzeug dargestellt, die mit einer Anzeigeeinheit 2 verbunden ist. Die Anzeigeeinheit 2 weist eine Anzeigefläche 3 auf, in der eine Liste 4 mit verschiedenen Ortseinträgen 5, 5' dargestellt ist. Aus Gründen der Übersichtlichkeit der Zeichnung sind weitere Ortseinträge nicht mit einem Bezugszeichen versehen. In einem bevorzugten Ausführungsbeispiel ist die Anzeigefläche 3 als eine berührungsempfindliche Anzeigefläche ausgebildet, so dass ein in der Liste 4 dargestellter Ortseintrag 5, 5' durch Berühren des jeweiligen Ortseintrags ausgewählt werden kann. In weiteren Ausführungsbeispielen ist jedoch auch eine Auswahl mittels an der Anzeigeeinheit 2 angeordneter Bedienelemente 6 oder mittels eines mit der Navigationsvorrichtung 1 verbundenen Bedienfeldes 7 mit Drucktasten 8 möglich. Für eine Vorauswahl der in der Liste dargestellten Ortsnamen ist eine Auswahl aus einem nicht näher eingezeichneten Buchstabenfeld 9 möglich, das ebenfalls in der Anzeigefläche 3 dargestellt wird und aus dem einzelne, in dem Buchstabenfeld 9 angezeigte Buchstaben mittels der Bedienelemente 6 bzw. dem Bedienfeld 7 auswählbar sind. Die Anzeigeeinheit 2 ist in einem bevorzugten Ausführungsbeispiel an der Mittelkonsole des Fahrzeugs angeordnet und ist vorzugsweise als eine Flüssigkristallanzeige ausgeführt. Neben einer Auswahl sind in der Anzeigefläche 3 Kartenanzeigen und/oder Richtungsempfehlungen mit Fahranweisungen an den Fahrer darstellbar.

Die Navigationsvorrichtung 1 bestimmt über eine Ortungsvorrichtung 10, vorzugsweise eine Satellitenortungsvorrichtung mittels des GPS (Global Positioning System) eine aktuelle Position des Fahrzeugs, in dem die Navigationsvorrichtung 1 angeordnet ist. Eine Rechenvorrichtung 11, die in der Navigationsvorrichtung 1 vorzugsweise hinter der Mittelkonsole des Fahrzeugs angeordnet ist, bestimmt durch einen Zugriff auf einen Datenträger 12 nach Eingabe eines Fahrziels aus der Liste 4 eine Fahrtroute von der über die Ortungsvorrichtung 10 ermittelten aktuellen Fahrzeugposition zu dem eingegebenen Fahrziel. Auf dem Datenträger 12 ist eine digitale Karte mit einem Straßennetz gespeichert. Neben den in der Anzeigefläche 3 dargestellten Fahrhinweisen können Fahrhinweise auch akustisch über einen Lautsprecher 13 ausgegeben werden.

Bei einem Aktivieren der Navigationsvorrichtung 1 wird zunächst ein Fahrer über die Anzeigefläche 3 zur Eingabe eines Fahrziels aufgefordert. Über die Drucktasten 8, die Bedienelemente 6 und/oder eine Berührung der berührungsempfindlichen Anzeigefläche 3 werden zunächst Buchstaben eines gewünschten Fahrziels eingegeben. In Abhängigkeit von den Buchstaben wird eine Liste 4 dargestellt, wobei die Listeneinträge, die dargestellt werden, mit ihren Anfangsbuchstaben jeweils mit den eingegebenen Buchstaben übereinstimmen. Liegen Einträge vor, deren anfängliche Namensbestandteile übereinstimmen, wird entweder gemäß der vorliegenden Erfindung nur der Hauptort angezeigt und durch eine Markierung 14 gekennzeichnet, wie dies in der Zeichnung Eintrag 5 dargestellt ist. Aufgrund der Markierung 14 wird einem Benutzer angezeigt, dass zu diesem Hauptort eine Mehrzahl von Einträgen in der Liste vorhanden sind. Wählt ein Benutzer den Eintrag 5 aus, wird anstelle der Liste 4 eine weitere Liste angezeigt, in der nur Einträge zu dem in dem Eintrag 5 dargestellten Hauptort mit einem übereinstimmenden ersten Namensbestandteil dargestellt werden, der vorzugsweise den Hauptort zu allen in der weiteren Liste dargestellten Ortsnamen bezeichnet. Alle anderen Einträge, die nicht mit einer Markierung 14 gekennzeichnet sind, sind unmittelbar auswählbar. Insbesondere werden in der Liste 4 solche Einträge angezeigt, die zwar übereinstimmende Namensbestandteile aufweisen, bei dem jedoch maximal drei Einträge mit übereinstimmenden Namensbestandteilen existieren. Sind mehr Einträge zu dem übereinstimmenden Namensbestandteil vorhanden, wird nur der Hauptort in der Liste 4 angezeigt.

In der Figur 4 ist ein Ausführungsbeispiel für die Durchführung des erfindungsgemäßen Verfahrens dargestellt. Ausgehend von einem Aktivierungsschritt 20 wird die Darstellung eines Eintrags in der Liste 4 in der Anzeigefläche 3 ausgelöst. In einem ersten Entscheidungsschritt 21 wird überprüft, wieviele Einträge zu einem Namensbestandteil existieren. In einem ersten Entscheidungsschritt 21 wird überprüft, wieviele Eintragungsalternativen zu einem Eintrag existieren. Wird in dem ersten Entscheidungsschritt 21 festgestellt, dass drei oder weniger Einträge existieren, so wird zu einem ersten Darstellungsschritt 22 verzweigt, in dem jeder dieser Einträge, sofern Platz in der Liste 4 vorhanden ist, angezeigt wird. Durch eine Pfeildarstellung 15 wird vorteilhaft auf weitere zu dem gleichen Namensbestandteil gehörende Anzeigen verwiesen. Durch die Auswahl von ebenfalls in der Anzeige dargestellten Pfeiltasten 16 kann der Benutzer nun die Liste entsprechend ihrer Reihenfolge durchlaufen, wobei die Pfeiltasten entweder über die Drucktasten 8, die Bedienelemente 6 und/oder eine Berührung der Anzeigefläche 3 eingebbar sind. Die in dem ersten Entscheidungsschritt 21 vorgegebene Anzahl kann dabei von der Größe der Stadt oder dem Namen der Stadt abhängig gemacht werden. Bei größeren Städten kann die vorgegebene Anzahl je nach Einwohnerzahl auf fünf, sieben oder auch auf zehn Einträge gesetzt werden. Ferner wird für häufig angefahrene Städte bzw. für häufig angefahrene Fahrziele auch ein direkter Listeneintrag in der Liste 4 vorgesehen. In einem weiteren Ausführungsbeispiel kann auch ein häufig angewähltes Ziel aus der Auswahlliste, die über eine Auswahl des Hauptortes erst darstellbar ist, aus dieser Auswahlliste entnommen und nur dieses direkt in die zuerst angezeigte Liste 4 übernommen werden.

Wird in dem ersten Entscheidungsschritt 21 festgestellt, dass die vorgegebene Anzahl von Einträgen zu einem gleichen Namensbestandteil überschritten wird, z.B. bei mehr als drei Einträgen, so wird zu einem zweiten Darstellungsschritt 23 verzweigt, in dem ein Eintrag mit einer Markierung 14 dargestellt wird. In einem zweiten Entscheidungsschritt 24 wird überprüft, ob der Eintrag mit der Markierung 14 ausgewählt wird. Ist dies nicht der Fall, so wird zu einem Endschritt 25 verzweigt und das Eingabeverfahren ist mit der Auswahl eines anderen ausgewählten Fahrziels beendet. Wird dagegen der mit der Markierung 14 versehene Eintrag ausgewählt, so wird zu einem dritten Darstellungsschritt 26 verzweigt, wobei ein Auswahlmenü entsprechend der Liste 4 angezeigt wird, in dem die Einträge zu dem Ort mit dem gleichen Namensbestandteil dargestellt werden. Bei der Ortseingabe sind unter einem übereinstimmenden Namensbestandteil nicht zufällig übereinstimmende Buchstaben oder Buchstabenkombinationen zu verstehen, sondern sinnvoll zugeordnete Ortseinheiten.

Für den Fall, dass verschiedene Orte einen gleichen Namen aufweisen, wird eine Ortsunterscheidung durch eine geeignete Konkretisierung in der Anzeige klargestellt bzw. eine Auswahl erfolgt in einer bevorzugten Ausführungsform mittels einem hierfür vorgesehenen Auswahlmenü. Beispielsweise wird für die Stadt Gerlingen nur der Hauptort "Gerlingen" und der Stadtteil "Gerlingen-Schillerhöhe" angezeigt. Da nur zwei Einträge für den Ort vorgegeben sind, werden beide Einträge in der Liste 4 unmittelbar angezeigt. Für die benachbart liegende Stadt Stuttgart ist dagegen der Eintrag einer Vielzahl von Stadtteilen vorgesehen, so dass in der Liste 4 nur Stuttgart mit der Markierung 14 zusammen angezeigt wird.

Einzelne Stadtteile, z.B. Stuttgart-Feuerbach, Stuttgart-Zuffenhausen oder Stuttgart-Zentrum, werden nach Auswahl des Namens "Stuttgart" in einem eigenen Auswahlmenü angezeigt. Wird einer der Stadtteile von Stuttgart durch den Fahrer besonders häufig ausgewählt, z.B. Stuttgart-Zentrum, so wird der Eintrag Stuttgart-Zentrum neben dem Eintrag mit der Markierung 14 in die Liste 4 mit aufgenommen. In einem weiteren Ausführungsbeispiel können die Auswahlmenüs auch als ein sogenanntes Fenster über dem bisherigen Auswahlmenü eingeblendet werden. Neben den Namen von Städten können auch die Namen von Landkreisen oder anderen Verwaltungsgliederungen für die Einträge in der Liste ausgewählt werden.

In einem weiteren Ausführungsbeispiel kann das Eingabeverfahren auch für die Auswahl von mehrdeutigen Ortsnamen verwendet werden. Wird z.B. der Ortsname "Monheim" eingegeben, so wird der Ort in der Auswahlliste angezeigt und es wird einmal zu dem Ortsnamen einmal die Bezeichnung "Schwaben" und einmal die Bezeichnung "Rheinland" angegeben, um die beiden verschiedenen Orte mit gleichem Namen voneinander unterscheiden zu können. Bei der Ortsbezeichnung "Neukirchen" dagegen gibt es zahlreiche Alternativen. Dieser Ortsname wird daher mit der Markierung 14 versehen in der Auswahlliste angezeigt. Nach der Anwahl werden die Alternativen in einem gesonderten Menü ausgegeben. Alleine bei deutschen Orten sind dies z.B. unter anderem die Alternativen Neukirchen-Altmark, Neukirchen in Niederbayern, Neukirchen bei Heiligenblut, Neukirchen bei Oldenburg in Holstein, Neukirchen bei Sulzbach-Rosenberg und. Ergänzend können auch Orte in der Auswahlliste aufgenommen werden, die selber nur Ortsteile sind und/oder die lediglich einen weiteren, jedoch nicht ersten Namensbestandteil aufweisen, der mit dem ausgewählten Namensbestandteil übereinstimmt. Bei dem gewählten Beispiel "Neukirchen" kann z.B. zusätzlich Bergisch Neukirchen aufgenommen werden, das die Bezeichnung "Neukirchen" lediglich als zweiten Namensbestandteil aufweist und das heute zu der Stadt Leverkusen gehört.

## Patentansprüche

1. Eingabeverfahren zur Eingabe eines Namens, insbesondere zur Fahrzieleingabe in eine Navigationsvorrichtung, wobei mindestens eine Liste von Namen angezeigt wird und wobei ein Name aus der mindestens einen Liste zur Eingabe ausgewählt wird, wobei Namen mit teilweise übereinstimmenden Namensbestandteilen angezeigt werden, **dadurch gekennzeichnet, dass** bis zu einer vorgegebenen Anzahl von Namen mit einem übereinstimmenden Namensbestandteil die Namen mit dem übereinstimmenden Namensbestandteil alle in einer ersten Liste zusammen mit anderen Namen angezeigt werden und dass bei einem Überschreiten der vorgegebenen Anzahl von Namen mit dem übereinstimmenden Namensbestandteil die Namen mit dem übereinstimmenden Namensbestandteil in einer zweiten Liste alleine angezeigt werden.

2. Eingabeverfahren nach Anspruch 1, **dadurch gekennzeichnet, dass** die übereinstimmenden Namenbestandteile ganze Wörter sind.

3. Eingabeverfahren nach einem der vorhergehenden Ansprüche, **dadurch gekennzeichnet, dass** die übereinstimmenden Namenbestandteile Ortsnamen sind.

4. Eingabeverfahren nach einem der vorhergehenden Ansprüche, **dadurch gekennzeichnet, dass** die Anzahl von übereinstimmenden, ersten Namensbestandteilen berücksichtigt wird.

5. Eingabeverfahren nach Anspruch 4, **dadurch gekennzeichnet, dass** der erste, übereinstimmende Namensbestandteil einen Ortsnamen bezeichnet und dass folgende Namensbestandteile einen Ortsteil oder eine Einrichtung in dem Ort bezeichnen.

6. Eingabeverfahren nach einem der Ansprüche 3-5, **dadurch gekennzeichnet, dass** die vorgegebene Anzahl in Abhängigkeit von einer Einwohnerzahl des Ortes gewählt wird.

7. Eingabeverfahren nach einem der vorhergehenden Ansprüche, **dadurch gekennzeichnet, dass** die vorgegebene Anzahl in Abhängigkeit von dem übereinstimmenden Namensbestandteil vorgegeben wird.

8. Eingabeverfahren nach einem der Ansprüche 1-5, **dadurch gekennzeichnet, dass** die vorgegebene Anzahl drei beträgt.

9. Verwendung eines Eingabeverfahrens nach einem der vorhergehenden Ansprüche zur Eingabe von Ortsnamen in eine Navigationsvorrichtung in einem Kraftfahrzeug.

## Claims

1. Input method for entering a name, in particular for inputting the destination into a navigation device, wherein at least one list of names is displayed, and wherein a name is selected from the at least one list for inputting, wherein names with partially corresponding name components are displayed, **characterized in that** up to a predefined number of names with a corresponding name component, the names with the corresponding name component are all displayed in a first list together with other names, and **in that** when the predefined number of names with the corresponding name component is exceeded, the names with the corresponding name component are displayed alone in a second list.

2. Input method according to Claim 1, **characterized in that** the corresponding name components are entire words.

3. Input method according to one of the preceding claims, **characterized in that** the corresponding name components are names of localities.

4. Input method according to one of the preceding claims, **characterized in that** the number of corresponding, first name components is taken into account.

5. Input method according to Claim 4, **characterized in that** the first, corresponding name component denotes a name of a locality, and **in that** the following name components denote a part of a locality or a device in the locality.

6. Input method according to one of Claims 3 - 5, **characterized in that** the predefined number is selected as a function of a number of inhabitants of the locality.

7. Input method according to one of the preceding claims, **characterized in that** the predefined number is predefined as a function of the corresponding name component.

8. Input method according to one of Claims 1 - 5, **characterized in that** the predefined number is three.

9. Use of an input method according to one of the preceding claims for inputting names of localities into a navigation device in a motor vehicle.

## Revendications

1. Procédé de saisie pour entrer un nom, en particulier pour entrer une destination dans un dispositif de navigation, dans lequel au moins une liste de noms est indiquée et dans lequel un nom à entrer est sélectionné à partir de l'au moins une liste, des noms avec des constituants de nom partiellement coïncidents étant indiqués, **caractérisé en ce qu'**à l'exception d'un nombre prédéfini de noms avec le constituant de nom coïncident, les noms avec le constituant de nom coïncident sont tous indiqués conjointement dans une première liste avec d'autres noms, et **en ce que** dans le cas d'un dépassement du nombre prédéfini de noms avec le constituant coïncident, les noms avec le constituant de nom coïncident sont indiqués seuls dans une deuxième liste.

2. Procédé de saisie selon la revendication 1, **caractérisé en ce que** les constituants de nom coïncidents sont des mots entiers.

3. Procédé de saisie selon l'une quelconque des revendications précédentes, **caractérisé en ce que** les constituants de nom coïncidents sont des noms de lieux.

4. Procédé de saisie selon l'une quelconque des revendications précédentes, **caractérisé en ce que** le nombre de premiers constituants de nom coïncidents est pris en compte.

5. Procédé de saisie selon la revendication 4, **caractérisé en ce que** le premier constituant de nom coïncident désigne un nom de lieu et **en ce que** les constituants de nom suivants désignent une partie d'un lieu ou une installation dans le lieu.

6. Procédé de saisie selon l'une quelconque des revendications 3 à 5, **caractérisé en ce que** le nombre prédéfini est sélectionné en fonction d'un nombre d'habitants du lieu.

7. Procédé de saisie selon l'une quelconque des revendications précédentes, **caractérisé en ce que** le nombre prédéfini est prédéfini en fonction du constituant du nom coïncident.

8. Procédé de saisie selon l'une quelconque des revendications 1 à 5, **caractérisé en ce que** le nombre prédéfini est de trois.

9. Utilisation d'un procédé de saisie selon l'une quelconque des revendications précédentes, pour saisir des noms de lieux dans un dispositif de navigation d'un véhicule automobile.
